# EUROPÄISCHE PATENTANMELDUNG

(11) **EP 4 428 415 A1**
(43) Veröffentlichungstag der Anmeldung: **11.09.2024**
(21) Anmeldenummer: 24151158.3
(22) Anmeldetag: 10.01.2024
(51) Int. Cl.: F16K 31/04, F16K 37/00, F16K 27/06

(54) **VENTILAUTOMATIK**

(30) Priorität: 07.03.2023 DE 102023105552
(71) Anmelder: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(57) **Zusammenfassung**

Eine Ventilautomatik zum Ändern einer Wasserströmung durch eine Wasserarmatur enthaltend einen Antrieb (28) zum Betätigen eines Ventils; und eine mit Signalen eines oder mehrerer Sensoren oder Signalgebers beaufschlagte Steuerung zur Steuerung des Antriebs (28) nach Maßgabe der erhaltenen Signale; ist dadurch gekennzeichnet, dass eine Aufnahme für den Anschluss einer austauschbaren Anschlusseinheit mit einer Vielzahl von Anschlüssen vorgesehen ist und die Signale über einen oder mehrere vordefinierte Anschlüsse der Aufnahme zu der Steuerung übertragen werden; die Steuerung wenigstens zwei Steuer- und Auswerteeinheiten für wenigstens zwei verschiedene Wasserarmaturen unterschiedlicher Funktionalität umfasst; und eine Erkennungseinheit in der Steuerung vorgesehen ist, welche nach Maßgabe der an der Anschlusseinheit mit Signalen belegten Anschlüsse eine dieser Belegung zugeordnete Steuer- und Auswerteeinheit der Steuerung aktiviert.

## Beschreibung

### Technisches Gebiet

Die Erfindung betrifft eine Ventilautomatik zum Ändern einer Wasserströmung durch eine Wasserarmatur enthaltend:
(a) einen Antrieb zum Betätigen eines Ventils; und
(b) eine mit Signalen eines oder mehrerer Sensoren oder Signalgebers beaufschlagte Steuerung zur Steuerung des Antriebs nach Maßgabe der erhaltenen Signale.

Wasserarmaturen sind beispielsweise Trinkwasserarmaturen oder Heizungsarmaturen. Dazu gehören neben steuerbaren Absperrungen, Filterarmaturen, beispielsweise Rückspülfilter, Leckageschutzarmaturen, Armaturen zur Durchführung einer Hygienespülung, Druckmindererarmaturen mit und ohne Rückspülfilter, Ionentauscher- und andere Wasserbehandlungsarmaturen, Sicherheitsventile, Sicherheitsgruppen, Systemtrenner, Dosierarmaturen, Verschneidearmaturen und Kombinationsarmaturen, die mehrere oder weitere Funktionalitäten aufweisen.

Ältere Armaturen haben häufig Hähne, Hebel und Ventile, die von Hand einstellbar sind. Typische Absperrventile, etwa Kugelhähne, werden zur Unterbrechung oder Reduzierung einer Wasserströmung durch einfache Rotation an einem Hebel betätigt. Auch Parameter, wie etwa der Ausgangsdruck eines Druckminderers oder der Verschneidungsgrad von behandeltem mit unbehandeltem Wasser in einer Wasserbehandlungsarmatur lassen sich von Hand einstellen. Typischerweise werden derlei Einstellungen von Fachpersonal am Einsatzort vorgenommen. Das ist aufwändig. Armaturen mit einer elektronischen Steuerung, die einen Aktuator steuert, sind komfortabler und ermöglichen die Fernbedienung.

Viele Armaturen weisen eine Absperrung auf. Eine Absperrung ermöglicht die Wartung und ggf. den Ausbau der Armatur oder darin enthaltener Komponenten, ohne die Hauptwasserleitung absperren zu müssen. Eine Absperrung kann aber auch eine eigene Funktionalität darstellen, etwa bei Leckageschutzarmaturen oder Armaturen zur Durchführung einer Hygienespülung.

Viele Ventilautomatiken, beispielsweise Absperrautomatiken, umfassen eine Steuerung die mit den Signalen eines Sensors oder anderen Signalgebers beaufschlagt sind.

### Stand der Technik

WO 2014/040 823 A1 offenbart eine Anordnung zur Durchführung einer Hygienespülung in einer Wasserinstallation. Die Anordnung umfasst insbesondere eine Armatur mit einem Strömungsmesser und einer Absperrung zum Unterbrechen der Frischwasserversorgung. Eine Steuerung erzeugt ein Steuersignal zum Öffnen der Absperrung für einen begrenzten Zeitraum, wenn der Strömungsmesser über einen längeren Zeitraum keine Strömung misst und Stagnationsgefahr besteht.

WO 2014/029 699 A1 offenbart eine Leckageschutzanordnung mit Armaturenteilen, die in eine Wasserinstallation vor einer Zapfstelle eingebaut werden. Die Anordnung umfasst insbesondere eine Armatur mit einem Strömungsmesser und einer Absperrung zum Unterbrechen der Wasserversorgung. Eine Steuerung erzeugt ein Steuersignal zum Schließen der Absperrung, wenn der Strömungsmesser unerwünschte oder untypische Strömungsverhältnisse misst und Leckageverdacht besteht. Es ist ferner offenbart, mehrere unterschiedliche Leckageschutzarmaturen einzusetzen, die jede eine eigene, aber immer gleiche Steuerung aufweisen. Die Steuerungen sind ausschließlich für die Verwendung mit den dort offenbarten Leckageschutzarmaturen gleicher Funktionalität eingerichtet.

DE 20 2018 102 493 U1 und DE 20 2016 103 116 U1 offenbaren Filterarmaturen mit Rückspülautomatik. Der Filter kann sich mit der Zeit zusetzen. Eine Steuerung erzeugt ein Steuersignal zum Öffnen einer Absperrung am Ablauf, wenn ein Schwellwert für einen Druckabfall am Filter oder eine bestimmte Zeitspanne seit der letzten Rückspülung erreicht wird. Dann wird die Strömung durch den Filter umgekehrt und der Filter gereinigt.

DE 20 2009 001 957 U1 offenbart eine Heizungsarmatur zum Füllen und Nachfüllen von Heizungen mit Wasser mit einer Absperrung, einem Rohrtrenner mit Nachfüllautomat und einem Rückspülfilter mit Rückspülautomat. Die Automaten sind optional und haben jeweils eine eigene Steuerung für das zugehörige Modul.

Für jede der oben offenbarten Wasserarmaturen ist eine individuelle Steuerung mit eigens für den Verwendungszweck ausgestalteter Steuer- und Auswerteeinheit und eigens dafür entwickelter Software erforderlich. Die Steuerungen dieser Ventilautomatiken sind entweder in die Armatur integriert oder sie haben unterschiedliche mechanische und elektronische Anschlüsse mit denen sie an die Armatur anschließbar sind. Jede der Armaturen hat ein eigenes Gehäuse.

### Offenbarung der Erfindung

Es ist Aufgabe der Erfindung, die Herstellungskosten der oben beschriebenen Ventilautomatiken zu verringern. Erfindungsgemäß wird die Aufgabe dadurch gelöst, dass
(c) eine Aufnahme für den Anschluss einer austauschbaren Anschlusseinheit mit einer Vielzahl von Anschlüssen vorgesehen ist und die Signale über einen oder mehrere vordefinierte Anschlüsse der Aufnahme zu der Steuerung übertragen werden;
(d) die Steuerung wenigstens zwei Steuer- und Auswerteeinheiten für wenigstens zwei verschiedene Wasserarmaturen unterschiedlicher Funktionalität umfasst; und
(e) eine Erkennungseinheit in der Steuerung vorgesehen ist, welche nach Maßgabe der an der Anschlusseinheit mit Signalen belegten Anschlüsse eine dieser Belegung zugeordnete Steuer- und Auswerteeinheit der Steuerung aktiviert.

Eine solche Ventilautomatik hat mehrere verschiedene, bereits werksseitig installierte Steuer- und Auswerteeinheiten integriert. Diese können entweder auf verschiedenen Platinen angeordnet sein und verschiedene Speicher und Prozessoren nutzen. Vorzugsweise nutzen die verschiedenen Steuer- und Auswerteeinheiten aber die gleichen Speicher und Prozessoren und unterscheiden sich insbesondere durch die Datenverarbeitungsprogramme.

Die Sensoren und Signalgeber sind nicht fest mit der Steuerung verdrahtet, sondern mit einer Anschlusseinheit, beispielsweise in Form eines Steckers mit einer Vielzahl von Anschlüssen, beispielsweise in Form von Pins, Kontakten oder Steckplätzen. Wenn die Anschlusseinheit in die Aufnahme gesteckt wird, wird eine Verbindung jedes der Anschlüsse mit einem zugehörigen Anschluss der Steuerung hergestellt. Signale der Sensoren und Signalgeber können auf diese Weise über die Anschlusseinheit an die Steuerung übertragen werden.

Jede Anschlusseinheit hat eine Vielzahl von Anschlüssen und unabhängig von der Funktionalität der Wasserarmatur für alle Anwendungen den gleichen Aufbau. Unterschiedliche Sensoren und Signalgeber werden mit Kabeln an vordefinierten Anschlüssen der Anschlusseinheit angeschlossen. Ein Strömungsmesser wird beispielsweise immer an dem für Strömungsmesser vorgesehenen Anschluss angeschlossen und ein Drucksensor an einem zugehörigen Anschluss für Drucksensoren. Es versteht sich, dass in der Anschlusseinheit mehrere Anschlüsse für Sensoren gleicher Art vorgesehen sein können, etwa mehrere Anschlüsse für mehrere Drucksensoren. Es wird aber für gleiche Wasserarmaturen immer die gleiche Belegung verwendet.

Die verschiedenen Steuer- und Auswerteeinheiten sind für unterschiedliche Wasserarmaturen mit unterschiedlichen Funktionalitäten geeignet. Um die Art der Wasserarmatur zu erkennen, an welche die Steuerung angeschlossen wurde, ist eine Erkennungseinheit vorgesehen, welche nach Maßgabe der an der Anschlusseinheit mit Signalen belegten Anschlüsse eine dieser Belegung zugeordnete Steuer- und Auswerteeinheit der Steuerung aktiviert. Die Erkennungseinheit kann die gleichen Speicher und Prozessoren nutzen, wie die Steuer- und Auswerteeinheiten. Sie kann aber auch eine separate Einheit bilden.

Mit der Erfindung wird eine Plug-and-Play-Lösung verwirklicht, bei der eine immer gleiche Ventilautomatik auf unterschiedliche Wasserarmaturen aufgesetzt werden kann, ohne dass besondere Expertise erforderlich ist.

Vorzugsweise sind die Steuerung und der Antrieb in einem gemeinsamen Gehäuse angeordnet, welches mit jeder der wenigstens zwei Wasserarmaturen derart verbindbar ist, dass der Antrieb mit dem Ventil zusammenwirkt. Insbesondere kann der Antrieb von einem Elektromotor gebildet sein, dessen Motorwelle an eine Spindel angreift, bei deren Drehung das Ventil betätigt wird. Das Ventil kann ein Kugelhahn sein. Es kann aber auch eine Verschneideeinrichtung, ein Magnetventil oder ein Druckmindererventil sein. Grundsätzlich ist die Art des Ventils nicht beschränkt, solange es mit einem geeigneten, von der Steuerung steuerbaren Antrieb antreibbar ist.

Die Erfindung sieht eine Steuerung vor, die mit den Signalen von Sensoren und/oder anderen Signalgebern beaufschlagt ist. Dabei können die Sensoren ausgewählt sein aus der Gruppe enthaltend: Temperatursensor; Drucksensor; Strömungssensor; Differenzdruckmesser; Feuchtigkeitssensor; Leitfähigkeitssensor; Füllstandssensor sowie mehrere gleichartige Sensoren und Kombinationen daraus. Es sind aber auch andere Signalgeber geeignet, etwa ein Zeit- oder Taktgeber, Sender-Empfänger für Signale von außen und dergleichen.

Die Wasserarmatur kann insbesondere eine oder mehrere Funktionalitäten erfüllen, die ausgewählt sind aus der Gruppe: Leckageschutz; Wasseraufbereitung; Dosierung; Heizungsbefüllung; Sicherheitsgruppe; Systemtrenner; einfache Rohrleitung; Druckminderer und Filter.

Es kann ferner vorgesehen sein, dass die Ventilautomatik eine Schnittstelle für die Kommunikation über das Internet oder ein anderes Netzwerk und/oder mit anderen Geräten aufweist. Die Schnittstelle kann drahtlos oder verdrahtet ausgebildet sein. Eine Drahtlosschnittstelle ist beispielsweise IR, Bluetooth oder WLAN. Es kann ferner eine verdrahtete Schnittstelle wie beispielsweise eine LAN-Verbindung vorgesehen sein. Die Schnittstellen ermöglichen den Download von Software-Updates, die Einstellung von Parametern, die Wartung und Überwachung der Funktionalitäten und die Übertragung von Sensordaten und Auswerteergebnissen.

Bei einer besonders vorteilhaften Ausgestaltung der Erfindung ist die Aufnahme für die Anschlusseinheit von einem Schacht gebildet, in welchen die Anschlusseinheit einsteckbar und dort arretierbar ist. Beispielsweise kann die Anschlusseinheit als Stecker ausgebildet sein, der in den Schacht einsteckbar und dort arretierbar ist. Es versteht sich, dass auch andere Ausgestaltungen zur Herstellung einer verdrahteten Verbindung geeignet sein können.

Die Erkennungseinheit und/oder die Steuer- und Auswerteeinheiten können insbesondere jeweils ein zugeordnetes Datenverarbeitungsprogramm umfassen, welches in einem Festspeicher gespeichert ist. Es kann ferner eine Schnittstelle vorgesehen sein, über welche Datenverarbeitungsprogramme änderbar und/oder hinzufügbar sind. Wichtig ist, dass für jede Wasserarmatur ein eigenes Datenverarbeitungsprogramm vorgesehen ist und eine gemeinsame Erkennungseinheit. Es versteht sich, dass die Datenverarbeitung auch remote erfolgen kann.

Die Erfindung umfasst ferner eine Modulanordnung, enthaltend die oben beschriebene Ventilautomatik und wenigstens zwei Wasserarmaturen mit jeweils einer zugehörigen austauschbaren Anschlusseinheit, die mit Sensoren in der Wasserarmatur verbunden ist. Die modulare Herstellung der Anordnung ermöglicht es, dass jeweils die gleichen Kunststoffteile, Platinen, Anschlusseinheiten etc. für verschiedene Anwendungen eingesetzt werden können. Alle Teile werden in größerer Stückzahl hergestellt und benötigen weniger Werkzeuge und Prozesse bei der Fertigung. Lagerhaltung und Transport vereinfachen sich. Dadurch wird erheblicher Aufwand gespart.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig. 1: zeigt einen Leckageschutz-Filter zur Verwendung mit einer Ventilautomatik.
- Fig.2: zeigt einen Rückspülfilter zur Verwendung mit der gleichen Ventilautomatik wie in Figur 1.
- Fig.3: zeigt ein Auslassventil zur Verwendung mit der gleichen Ventilautomatik wie in Figur 1.
- Fig.4: zeigt eine Wasserzählerarmatur zur Verwendung mit der gleichen Ventilautomatik wie in Figur 1.
- Fig.5: zeigt eine Armatur zum Füllen und Nachfüllen eines Heizkreislaufes ohne Systemtrenner zur Verwendung mit der gleichen Ventilautomatik wie in Figur 1.
- Fig.6: zeigt eine Armatur zum Füllen und Nachfüllen eines Heizkreislaufes mit Systemtrenner zur Verwendung mit der gleichen Ventilautomatik wie in Figur 1.
- Fig.7: ist eine perspektivische Ansicht von oben auf eine Ventilautomatik zur Betätigung von Ventilen, die beispielsweise in den Figuren 1 bis 6 illustriert sind.
- Fig.8: ist eine perspektivische Ansicht von unten auf die Ventilautomatik aus Figur 7.
- Fig.9: ist eine Explosionsdarstellung der Ventilautomatik aus Figur 7 und 8.
- Fig. 10: ist ein Vertikalschnitt durch die Ventilautomatik aus Figur 7 bis 9.
- Fig.11: zeigt den Leckageschutz-Filter aus Figur 1 mit installierter Ventilautomatik.
- Fig.12: ist ein Vertikalschnitt durch den Leckageschutz-Filter aus Figur 11.
- Fig.13: zeigt die Armatur aus Figur 5 mit installierter Ventilautomatik.
- Fig.14: ist ein Vertikalschnitt durch die Armatur aus Figur 13.
- Fig.15: zeigt die Armatur aus Figur 6 mit installierter Ventilautomatik.
- Fig.16: ist ein Vertikalschnitt durch die Armatur aus Figur 15.
- Fig.17: zeigt das Auslassventil aus Figur 3 mit installierter Ventilautomatik.
- Fig.18: ist ein Vertikalschnitt durch die Armatur aus Figur 17.
- Fig.19: zeigt die Wasserzählerarmatur aus Figur 4 mit installierter Ventilautomatik.
- Fig.20: ist ein Vertikalschnitt durch die Armatur aus Figur 19.

### Beschreibung der Ausführungsbeispiele

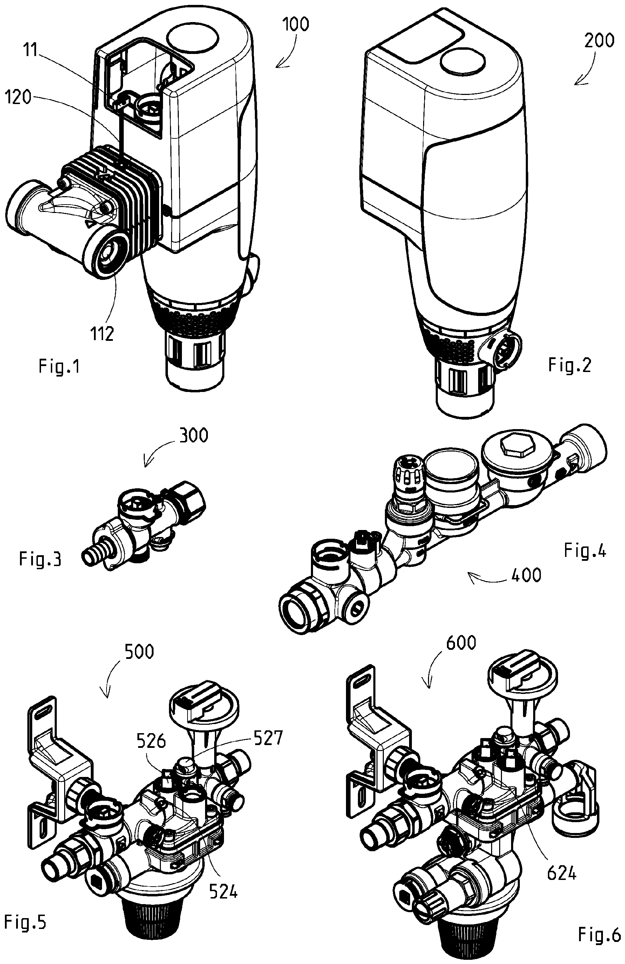

Die Figuren zeigen eine Vielzahl verschiedener Armaturen mit verschiedenen Funktionalitäten, die eine Absperrung und einen Sensor oder Signalgeber aufweisen. Figur 1 zeigt einen Leckageschutz-Filter 100. Figur 2 zeigt einen Rückspülfilter 200. Figur 3 zeigt ein Auslassventil 300. Figur 4 zeigt eine Wasserzählerarmatur 400. Figur 5 zeigt eine Armatur 500 zum Füllen und Nachfüllen eines Heizkreislaufes ohne Systemtrenner. Figur 6 zeigt eine Armatur 600 zum Füllen und Nachfüllen eines Heizkreislaufes mit Systemtrenner.

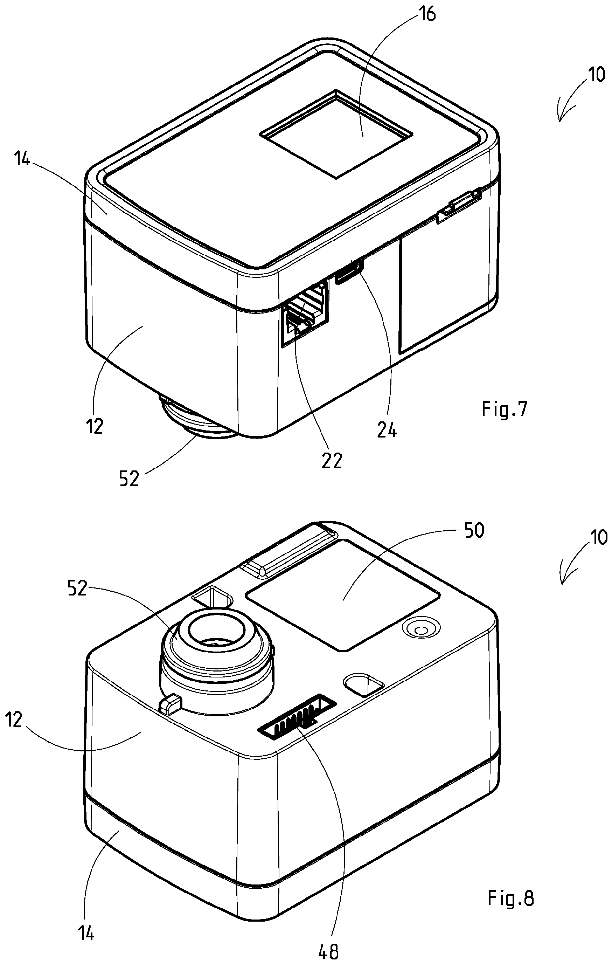

Diese an sich bekannten Armaturen 100, 200, 300, 400, 500 und 600 und andere Armaturen können mit einer allgemein mit 10 bezeichneten Ventilautomatik versehen werden. Die Ventilautomatik 10 ist in den Figuren 7 bis 10 gesondert dargestellt. Die Ventilautomatik 10 ist derart ausgebildet, dass sie ohne weitere Modifikation mit jeder der Armaturen 100, 200, 300, 400, 500 und 600 eingesetzt werden kann.

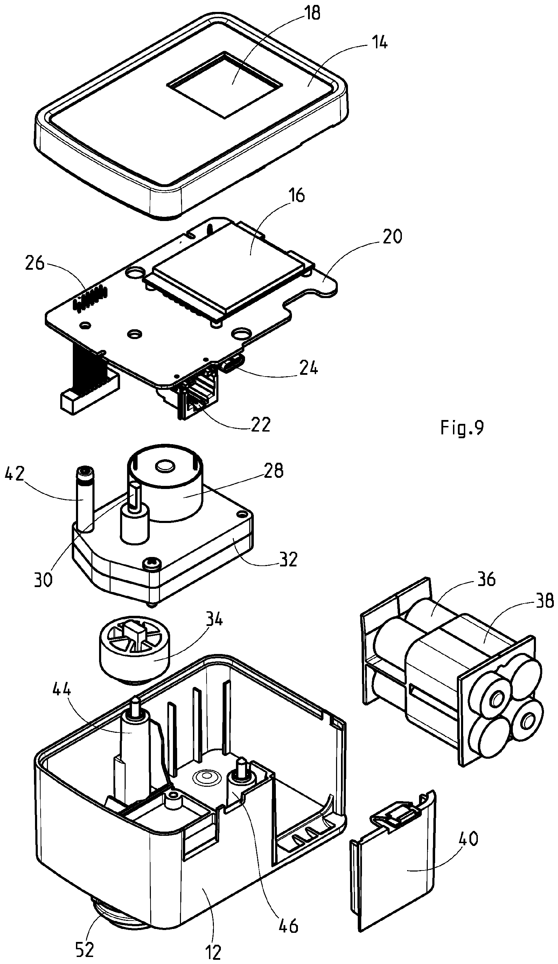

Die Ventilautomatik 10 hat ein Gehäuse 12, das mit einem Deckel 14 verschlossen ist. Auf der Oberseite der Ventilautomatik 10 ist ein Display 16 vorgesehen, welches durch eine Öffnung 18 im Deckel 14 sichtbar ist. Das Display 16 sitzt mit anderen elektronischen Komponenten, insbesondere Prozessor, Arbeitsspeicher, Festspeicher, Sender-Empfänger, Zeit- und Taktgeber, Wandler und dergleichen auf einer Platine 20 (Fig. 9). Signale können über einen Sender-Empfänger für elektromagnetische Signale oder verkabelt über entsprechende Interfaces 22, 24, 26 empfangen und ausgesendet werden. Im vorliegenden Ausführungsbeispiel sind an der Platine 20 eine LAN-Schnittstelle 22, ein USB-Anschluss 24 und eine Kabelschnittstelle 26 vorgesehen.

Die von einer Steuerung in der Ventilautomatik 10 erzeugten Steuersignale werden an einen integrierten Motor 28 übertragen. Der Motor 28 treibt eine Antriebswelle 30 an. Das Drehmoment wird im installierten Zustand über ein Getriebe 32 und eine Kupplung 34 auf die Absperrung einer der Armaturen 100, 200, 300, 400, 500 und 600 übertragen. Es versteht sich, dass die Ventilautomatik 10 auch für andere Armaturen mit einer Absperrung verwendet werden kann.

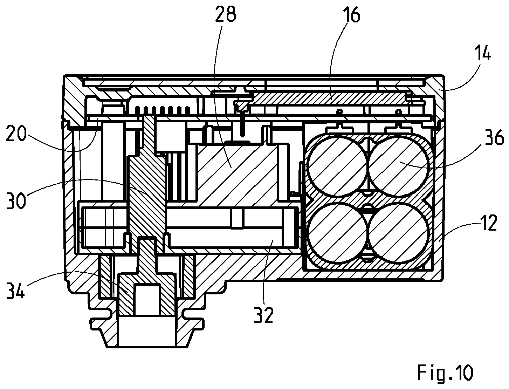

Der Motor 28 ist als Elektromotor ausgebildet und wird über einen USB-Anschluss mit Energie versorgt. Für den Notbetrieb im Falle eines Stromausfalls sind Batterien oder Akkumulatoren 36 in einem Energieversorgungspaket 38 für die Versorgung mit elektrischer Energie vorgesehen. Das Energieversorgungspaket 38 sitzt in einem mit einem Deckel 40 verschließbaren Batteriefach im Gehäuse 12. Verschiedene Abstandstifte 42, 44 und 46 halten die Platine 20, den Motor 28 mit Getriebe 32 und die Batterien in ihrer Position im Gehäuse 12. Dies ist in Figur 10 gut zu erkennen.

Auf der Unterseite der Ventilautomatik (Figur 8) ist ein Feld 50 für Haftetiketten vorgesehen, welche zur Typbezeichnung, Versionsangabe oder dergleichen genutzt werden können. Es kann auch eine Codierung, etwa ein Barcode oder ein QR-Code auf dem Haftetikett vorgesehen sein, die zu einer Internetseite mit weiteren Informationen oder Eingabemasken beispielsweise für eine Registrierung führen können.

Es ist ferner eine Aufnahme 48 für den Anschluss einer austauschbaren Anschlusseinheit mit einer Vielzahl von Anschlüssen vorgesehen. Die Anschlusseinheit hat für alle Armaturen 100, 200, 300, 400, 500 und 600 die gleichen Abmessungen. Die Anschlusseinheit kann in die Aufnahme 48 eingesteckt und ggf. dort arretiert werden. Im vorliegenden Ausführungsbeispiel ist die Anschlusseinheit von einem Stecker gebildet und die Aufnahme 48 von einem Schacht, in den der Stecker einklipsbar ist. Es versteht sich, dass die Aufnahme 48 und die Anschlusseinheit auch eine andere Form annehmen kann, welche eine elektrische und mechanische Verbindung ermöglicht.

Die Anschlusseinheit und die Aufnahme 48 haben eine Vielzahl von Anschlüssen, beispielsweise 16 Anschlüsse, in Form von Pins, Kontakten oder dergleichen, über welche eine Signalübertragungs-Verbindung herstellbar ist. Die Pins haben bei jeder Ventilautomatik 10 die gleiche Belegung. Beispielsweise können ein oder mehrere Pins für die Signale von Strömungssensoren, Zeitgebern, Temperatursensoren, Drucksensoren, Leitfähigkeitssensoren und dergleichen vorgesehen sein. Gleiche Pins werden immer mit der gleichen Art von Signalen beaufschlagt. Ein Temperatursensor wird beispielsweise nicht über einen Pin angeschlossen, der für einen Drucksensor vorgesehen ist. Ist kein derartiger Sensor in der Armatur vorgesehen, bleibt der Pin unbelegt.

Die Anschlusseinheit und die Aufnahme 48 sind so ausgelegt, dass jede der Armaturen 100, 200, 300, 400, 500 und 600, die mit der Ventilautomatik 10 verwendet werden soll, eine eigene Belegung aufweist. Die Pins oder anderen Anschlüsse sind entsprechend ihrer vorgesehenen Belegung definiert. Signale, die über einen der Anschlüsse übertragen werden, werden zur Steuerung der Ventilautomatik übertragen. Jede der Armaturen mit eigener Funktionalität hat quasi einen eigenen Fingerabdruck in Form einer Belegung und unterscheidet sich bei zumindest einem Pin von der Belegung einer anderen Armaturenart.

Die Ventilautomatik hat eine Erkennungseinheit, welche nach Maßgabe der belegten Pins oder anderen Anschlüsse das angeschlossene Gerät erkennt. Im vorliegenden Ausführungsbeispiel ist die Erkennungseinheit von einer Software gebildet, welche das Vorliegen oder Nicht-Vorliegen ankommender Signale an jedem der Anschlüsse erkennt und daraus ermittelt, welche Armatur angeschlossen ist. Es besteht aber auch die Möglichkeit, eine fest verdrahtete Erkennungseinheit in einem eigenen Modul zu verwenden. Die Erkennungseinheit aktiviert eine dieser Belegung zugeordnete Steuer- und Auswerteeinheit der Ventilautomatik.

Jede der Armaturen erfordert eine eigene Steuer- und Auswerteeinheit, welche der Funktionalität der Armatur entspricht. Es ist leicht einsehbar, dass beispielsweise ein Leckageschutz eine andere Steuer- und Auswerteeinheit erfordert, als beispielsweise ein Rückspülfilter. Die Ventilautomatik umfasst daher wenigstens zwei Steuer- und Auswerteeinheiten für wenigstens zwei verschiedene Wasserarmaturen unterschiedlicher Funktionalität, während nur eine gemeinsame Erkennungseinheit erforderlich ist. Wenn die Verwendung, wie im vorliegenden Ausführungsbeispiel, für 6 verschiedene Armaturen vorgesehen ist, sind folglich sechs Steuer- und Auswerteeinheiten erforderlich. Im vorliegenden Ausführungsbeispiel sind auch die Steuer- und Auswerteeinheiten von Software gebildet. Dabei ist es unschädlich, wenn einzelne Softwaremodule von zwei oder mehr Steuer- und Auswerteeinheiten genutzt werden. Es versteht sich, dass auch fest verdrahtete, separate Einheiten vorgesehen sein können. Die Verwendung von Software hat den Vorteil, dass diese auf einfache Weise beispielsweise über eine der Schnittstellen, upgedated, geändert und ergänzt werden können. Es ermöglicht ferner die Entwicklung neuer Armaturen, welche die Ventilautomatik ebenfalls nutzen können. Dann wird eine zusätzliche Steuer- und Auswerteeinheit für diese neue Funktionalität installiert.

Nachfolgend sind einige Ausführungsbeispiele für die Verwendung der Ventilautomatik 10 mit verschiedenen Armaturen illustriert.

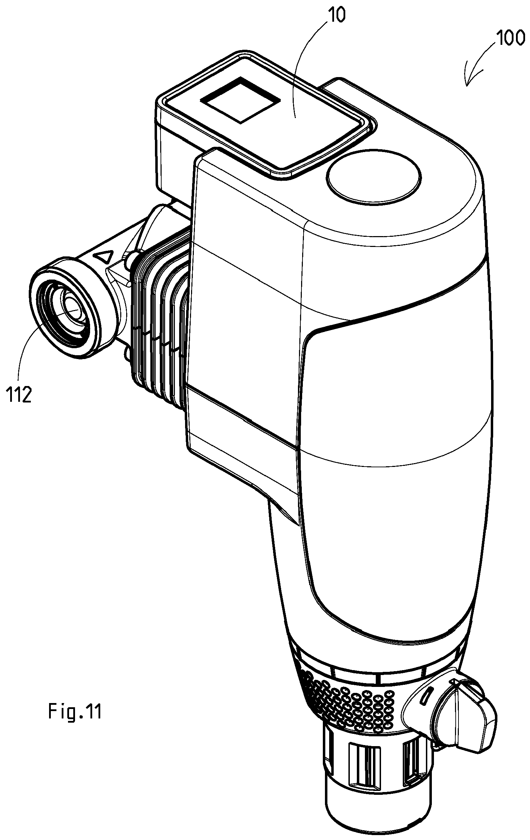

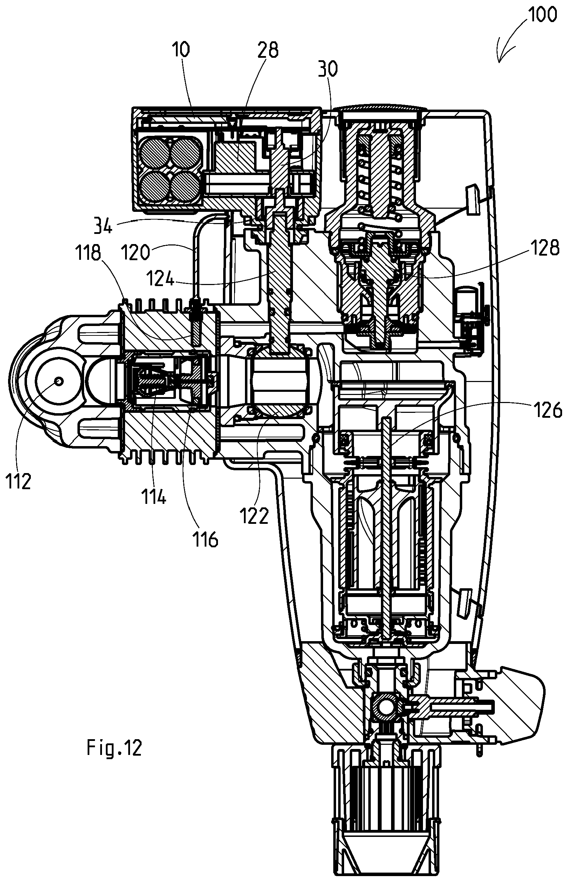

Figur 11 und Figur 12 zeigen den Leckageschutz-Filter 100 aus Figur 1 mit installierter Ventilautomatik 10. Wasser tritt durch einen Einlass 112 in die Armatur 100 ein und fließt in einem Zentralkanal durch einen Rückflussverhinderer 114. Stromabwärts zu dem Rückflussverhinderer 114 ist eine Turbine 116 in dem Zentralkanal angeordnet. Die Turbine 116 dient als Strömungsmesser. Die Rotation der Turbine wird mit einem Reed-Kontakt 118 erfasst und über eine Signalleitung 120 zur Ventilautomatik 10 geleitet. Dort wird das Signal über die Anschlusseinheit zur Steuerung übertragen und ausgewertet.

Stromabwärts zur Turbine 116 ist ein Kugelhahn im Strömungsweg vorgesehen. Der Kugelhahn umfasst eine Kugel 122, welche mit einer Spindel 124 verbunden ist. Die Spindel 124 erstreckt sich aus dem Gehäuse nach oben heraus. Das Gehäuse 12 der Ventilautomatik 10 bildet einen nach unten ragenden Stutzen 52. Dieser ist in Figur 8 gut zu erkennen. Wenn die Ventilautomatik 10 auf das Gehäuse des Leckageschutz-Filters 100 aufgesetzt wird, greift fluchtet der Stutzen 52 mit einem passenden Gehäusestutzen des Leckageschutz-Filters 100 und das freie Ende der Spindel 124 greift in die Kupplung 34 der aufgesetzten Ventilautomatik 10. Das freie Ende der Signalleitung 120 mündet in einem Anschlussstecker 11. Der Anschlussstecker wird in den Schacht 48 der Ventilautomatik geklipst. Die Erkennungssoftware der Ventilautomatik 10 erkennt, dass der Anschlussstecker zu einem Leckageschutz-Filter gehört und aktiviert eine zugehörige Auswerte- und Steuersoftware der Ventilautomatik, die bereits werksseitig installiert ist.

Wenn die Auswerteeinheit der Steuerung 10 vom Reed-Kontakt 118 ein Signal erhält, welches beispielsweise auf unerwünschte Strömungsverhältnisse an der Turbine 116, beispielsweise durch Leckage, zurückzuführen ist, wird ein Steuersignal erzeugt, welches den Motor 28 aktiviert. Der Motor 28 treibt die Motorwelle 30 und die Spindel 124 an. Dabei wird die Kugel 122 um eine vertikale Achse in der Darstellung rotiert und der Kugelhahn geschlossen. Es kann kein Wasser mehr durch die Armatur 100 fließen. Die genaue Funktionalität einer Leckageschutz-Armatur ist in WO 2014/029 699 A1 beschrieben und braucht daher nicht weiter erläutert werden.

Stromabwärts des Kugelhahns ist ein Rückspülfilter 126 und ein Druckminderer 128 installiert. Diese Komponenten sind aus dem Stand der Technik wohl bekannt und brauchen hier daher nicht weiter erläutert werden.

Figur 2 zeigt einen zeitgesteuerten Rückspülfilter ohne Leckageschutzfunktion. Die Rückspülung erfolgt in regelmäßigen Zeitintervallen.

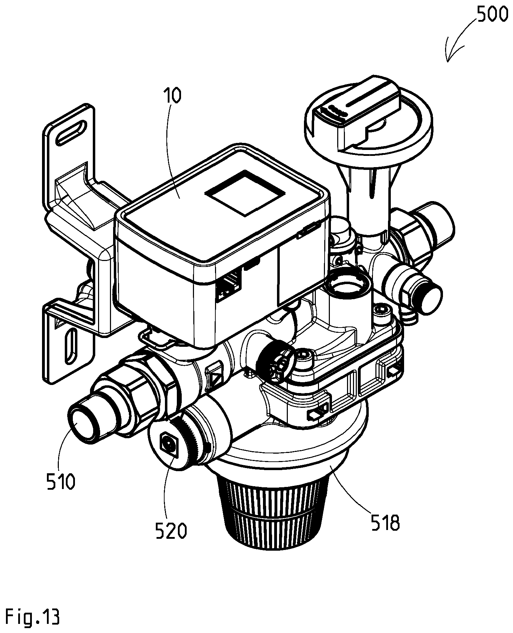

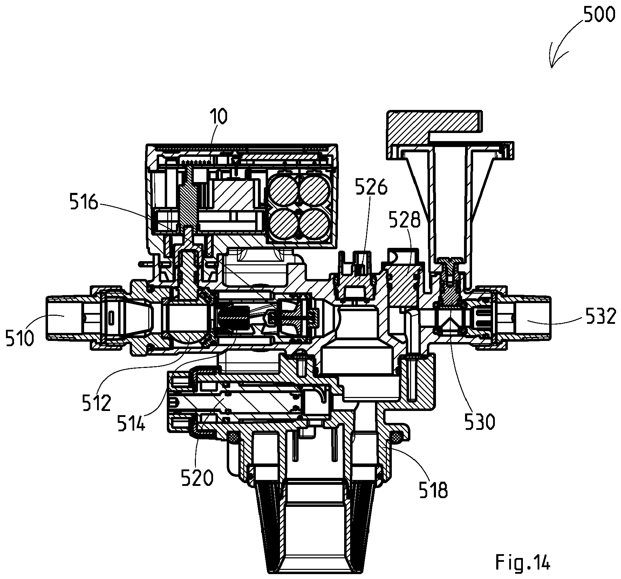

Figur 13 und Figur 14 zeigen die Armatur 500 zum Füllen und Nachfüllen eines Heizkreislaufes ohne Systemtrenner mit installierter Ventilautomatik 10. Frischwasser fließt zunächst durch einen vorgeschalteten Systemtrenner (nicht dargestellt) am Einlass 510 in die Armatur 500. Es fließt dann durch einen Kugelhahn mit einer Kugel 512. Der Kugelhahn wird in vorstehend beschriebener Weise durch die Ventilautomatik 10 geöffnet und geschlossen. Stromabwärts des Kugelhahns ist ein Rückflussverhinderer 514 und eine Turbine 516 zur Strömungsmessung im Strömungsweg angeordnet. Die mit einem zugehörigen Reed-Kontakt 524 (Fig. 5) erfassten Signale werden über eine Signalleitung und eine Anschlusseinheit zur Steuerung 10 geleitet.

Das Wasser wird anschließend durch einen Ionentauscher (nicht dargestellt) geleitet. Der Ionentauscher wird in einer Flasche bereitgestellt, auf welche die Armatur 500 mit einem Stutzen 518 aufsetzbar ist. Das behandelte Wasser wird durch eine Verschneideeinrichtung 520 geleitet und ggf. mit unbehandeltem Wasser gemischt, so dass ein gewünschter Härtegrad erreicht wird.

Stromabwärts zur Verschneidung sind Sensoren in Form eines Drucksensors 526 und eines Leitfähigkeitssensors 528 vorgesehen. Das behandelte Wasser fließt anschließend durch eine handbetätigbare Absperrung 530 zum Auslass 532. Dort steht es zum Befüllen des Heizkreislaufs zur Verfügung.

Die Signale des Strömungsmessers 516, Drucksensors 526 und des Leitfähigkeitssensors 528 werden über Signalleitungen zu einer Anschlusseinheit geleitet. Die Anschlusseinheit ist in den Schacht 48 der Ventilautomatik eingeklipst. Dabei wird der Kontakt zur Steuerung der Ventilautomatik 10 hergestellt. Die Erkennungseinheit der Ventilautomatik 10 erkennt, welche Armatur 500 angeschlossen ist und aktiviert die zugehörige, vorab gespeicherte Software für die Auswertung und Steuerung der Armatur.

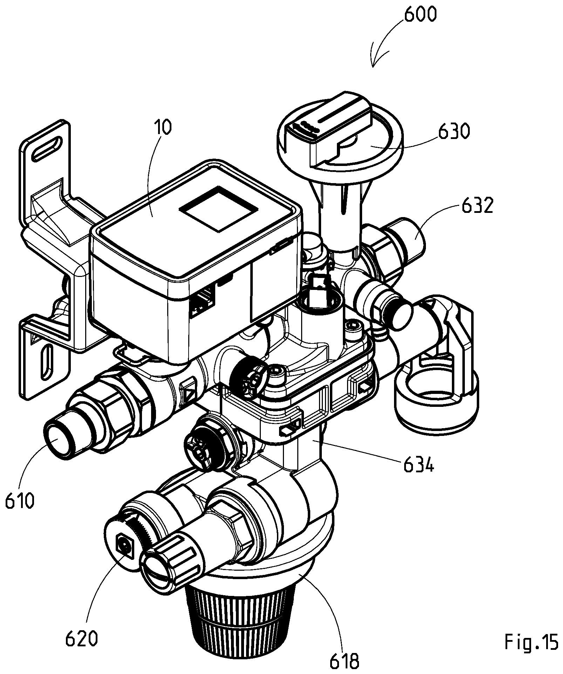

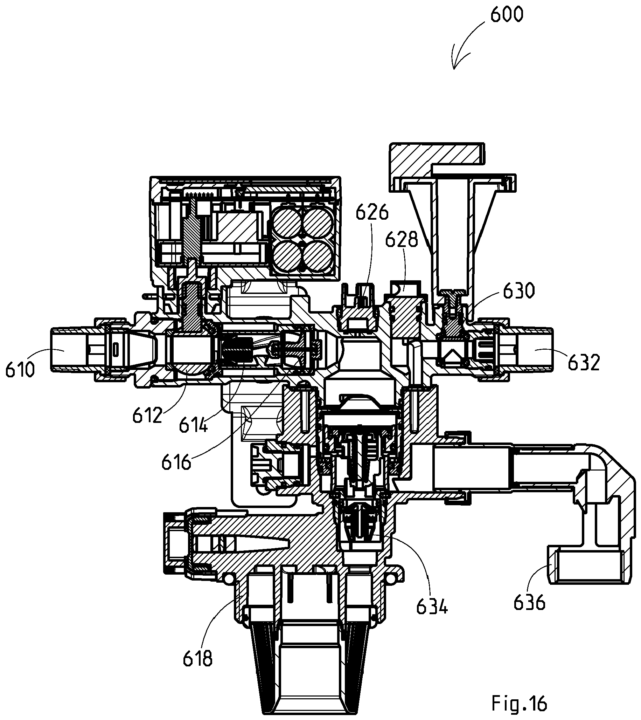

Figur 15 und Figur 16 zeigen die Armatur 600 aus Figur 6 zum Füllen und Nachfüllen eines Heizkreislaufes mit einem Systemtrenner und mit installierter Ventilautomatik. Die Armatur 600 hat alle Funktionalitäten der Armatur 500 und einen zusätzlichen Systemtrenner 634.

Frischwasser fließt am Einlass 610 in die Armatur 600. Es fließt dann durch einen Kugelhahn mit einer Kugel 612. Der Kugelhahn wird in vorstehend beschriebener Weise durch die Ventilautomatik 10 geöffnet und geschlossen. Stromabwärts des Kugelhahns ist ein Rückflussverhinderer 614 und eine Turbine 616 zur Strömungsmessung im Strömungsweg angeordnet. Die mit einem zugehörigen Reed-Kontakt 624 (Fig. 6) erfassten Signale werden über eine Signalleitung und eine Anschlusseinheit zur Steuerung 10 geleitet.

Das Wasser wird anschließend durch einen Ionentauscher (nicht dargestellt) geleitet. Der Ionentauscher wird in einer Flasche bereitgestellt, auf welche die Armatur 600 mit einem Stutzen 618 aufsetzbar ist. Das behandelte Wasser wird durch den Systemtrenner 634 mit Ablauftrichter 636 und eine Verschneideeinrichtung 620 geleitet und ggf. mit unbehandeltem Wasser gemischt, so dass ein gewünschter Härtegrad erreicht wird.

Stromabwärts zur Verschneidung sind Sensoren in Form eines Drucksensors 626 und eines Leitfähigkeitssensors 628 vorgesehen. Das behandelte Wasser fließt anschließend durch eine handbetätigbare Absperrung 630 zum Auslass 632. Dort steht es zum Befüllen des Heizkreislaufs zur Verfügung.

Die Signale des Strömungsmessers 616, Drucksensors 626 und des Leitfähigkeitssensors 628 werden über Signalleitungen zu einer Anschlusseinheit geleitet. Die Anschlusseinheit ist in den Schacht 48 der Ventilautomatik eingeklipst. Dabei wird der Kontakt zur Steuerung der Ventilautomatik 10 hergestellt. Die Erkennungseinheit der Ventilautomatik 10 erkennt, welche Armatur 600 angeschlossen ist und aktiviert die zugehörige, vorab gespeicherte Software für die Auswertung und Steuerung der Armatur.

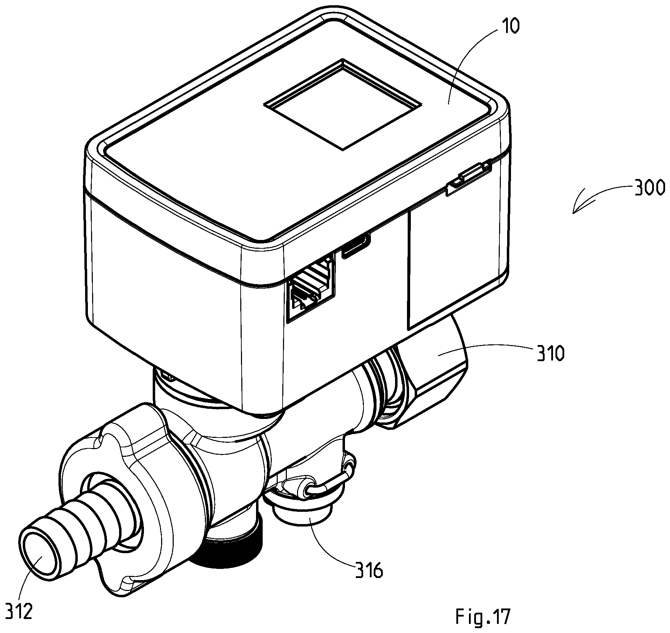

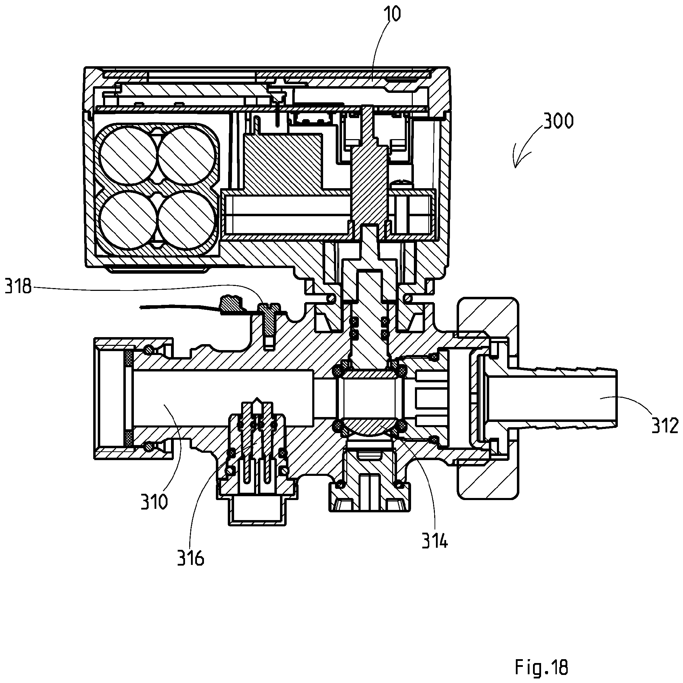

Die Armatur 600 kann mit der Ablassarmatur 300 zusammenwirken. Die Ablassarmatur 300 ist in Figur 17 und Figur 18 noch einmal im Detail dargestellt. Mit einer Ablassarmatur 300 kann Wasser aus einem Heizkreislauf abgelassen werden. Die Ablassarmatur 300 weist einen Anschlussstutzen 310 auf, mit dem sie an den Heizkreislauf (nicht dargestellt) angeschlossen ist. Das Wasser kann über einen Ablaufanschluss, beispielsweise einem Schlauchanschluss 312 abgelassen werden. Zwischen Anschlussstutzen 310 und Ablaufanschluss 312 ist ein Kugelhahn mit Kugel 314 angeordnet. Zum Entleeren oder Teilentleeren des Heizkreislaufs, wird der Kugelhahn geöffnet. Andernfalls bleibt der Kugelhahn geschlossen. Zum Betätigen des Kugelhahns wird die bereits beschriebene Ventilautomatik 10 verwendet, in deren Schacht 48 ein entsprechender Stecker eingeklipst wird.

Wenn die Ventilautomatik 10 für eine Ablassarmatur 300 verwendet wird und mit dieser verbunden wird, erkennt die Erkennungseinheit die Funktionalität und aktiviert die zugehörige Steuer- und Auswerteeinheit. Diese ist mit den Signalen eines Leitfähigkeitssensors 316 und eines Temperatursensors 318 beaufschlagt. Wenn Wasser über die Ablassarmatur 300 abgelassen wird, kann gleichzeitig Wasser mit der Heizungsarmatur 500 oder 600 nachgefüllt werden. Dieser Vorgang kann so lange durchgeführt werden, bis beispielsweise am Leitfähigkeitssensor 316 der Ablassarmatur eine gewünschte Leitfähigkeit vorliegt.

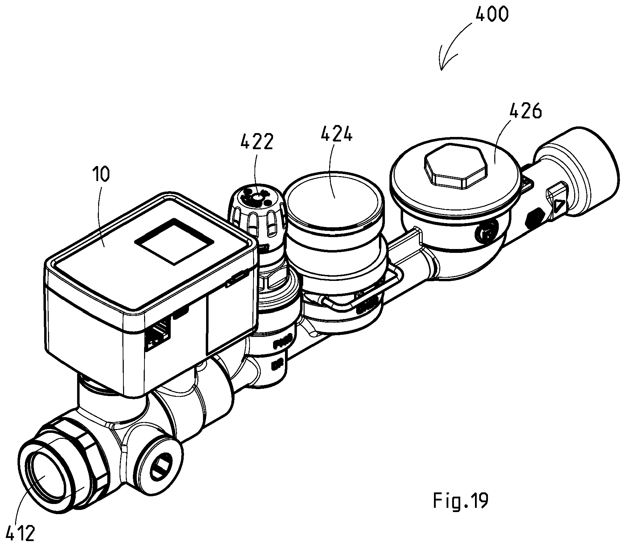

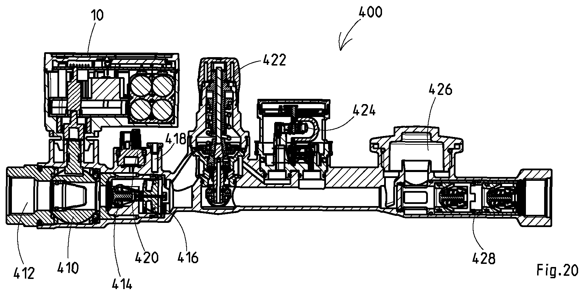

Figur 19 und Figur 20 zeigen die Wasserzählerarmatur 400 mit installierter Ventilautomatik 10. Die Wasserzählerarmatur 400 umfasst einen von der Ventilautomatik 10 gesteuerten Kugelhahn mit Kugel 410 hinter einem Einlass 412. Stromabwärts zu dem Kugelhahn ist ein Rückflussverhinderer 414 und ein Strömungsmesser in Form einer Turbine 416 mit Reed-Kontakt 418 angeordnet. Die Steuerung der Ventilautomatik 10 ist mit den Signalen des Reed-Kontakts 418 und eines Drucksensors 420 beaufschlagt. Dadurch können beispielsweise Leckage oder andere unerwünschte Druck- oder Strömungszustände ermittelt werden und ggf. die Absperrung betätigt werden.

Stromabwärts zur Turbine 416 ist ein Druckminderer 422 angeordnet. Der Eingangs- und der Ausgangsdruck vor bzw. hinter dem Druckminderer 422 wird mit einem Doppelmanometer 424 erfasst und angezeigt. Stromabwärts zu dem Doppelmanometer 424 ist ein geeichter Wasserzähler 426 und ein Systemtrenner 428 angeordnet.

Bei allen oben beschriebenen Armaturen wird die gleiche Ventilautomatik 10 verwendet. Je nach Funktionalität der Armatur werden unterschiedliche Steuer- und Auswerteeinheiten aktiviert, so dass das zugehörige Absperrventil trotz unterschiedlicher Situationen, in denen die Absperrung zu betätigen ist, immer mit der gleichen Ventilautomatik 10 betrieben werden kann. Die Anpassung an die Funktionalität erfolgt durch die Erkennung der Armatur und der Belegung der Anschlüsse an der Anschlusseinheit.

Während die vorliegenden Ausführungsbeispiele Kugelhähne beschreiben, kann die Ventilautomatik 10 auch für andere Arten von Ventilen, etwa Magnetventile, Druckminderer oder Verschneideventile verwendet werden.

## Patentansprüche

1. Ventilautomatik (10) zum Ändern einer Wasserströmung durch eine Wasserarmatur (100, 200, 300, 400, 500, 600) enthaltend:
(a) einen Antrieb (28) zum Betätigen eines Ventils (122, 314, 410, 512, 612); und
(b) eine mit Signalen eines oder mehrerer Sensoren (118; 316, 318; 418, 420; 516, 524, 526, 527; 616, 618, 624) oder Signalgebers beaufschlagte Steuerung zur Steuerung des Antriebs (28) nach Maßgabe der erhaltenen Signale;
**dadurch gekennzeichnet, dass**
(c) eine Aufnahme (48) für den Anschluss einer austauschbaren Anschlusseinheit mit einer Vielzahl von Anschlüssen vorgesehen ist und die Signale über einen oder mehrere vordefinierte Anschlüsse der Aufnahme zu der Steuerung übertragen werden;
(d) die Steuerung wenigstens zwei Steuer- und Auswerteeinheiten für wenigstens zwei verschiedene Wasserarmaturen (100, 200, 300, 400, 500, 600) unterschiedlicher Funktionalität umfasst; und
(e) eine Erkennungseinheit in der Steuerung vorgesehen ist, welche nach Maßgabe der an der Anschlusseinheit mit Signalen belegten Anschlüsse eine dieser Belegung zugeordnete Steuer- und Auswerteeinheit der Steuerung aktiviert.

2. Ventilautomatik (10) nach Anspruch 1, **dadurch gekennzeichnet, dass** die Steuerung und der Antrieb (28) in einem gemeinsamen Gehäuse (12, 14) angeordnet sind, welches mit jeder der wenigstens zwei Wasserarmaturen (100, 200, 300, 400, 500, 600) derart verbindbar ist, dass der Antrieb (28) mit dem Ventil (122, 314, 410, 512, 612) zusammenwirkt.

3. Ventilautomatik (10) nach Anspruch 2, **dadurch gekennzeichnet, dass** der Antrieb von einem Elektromotor (28) gebildet ist, dessen Motorwelle (30, 34) an eine Spindel (124) angreift, bei deren Drehung das Ventil (122, 314, 410, 512, 612) betätigt wird.

4. Ventilautomatik (10) nach einem der vorgehenden Ansprüche, **dadurch gekennzeichnet, dass** die Sensoren und Signalgeber ausgewählt sind aus der Gruppe enthaltend: Temperatursensor (318); Drucksensor (420, 526, 626); Strömungssensor (118; 418; 524; 624); Differenzdruckmesser; Feuchtigkeitssensor; Leitfähigkeitssensor (316; 528; 628); Zeitgeber; Füllstandssensor sowie mehrere gleichartige Sensoren und Kombinationen daraus.

5. Ventilautomatik (10) nach einem der vorgehenden Ansprüche, **dadurch gekennzeichnet, dass** die Wasserarmatur (100, 200, 300, 400, 500, 600) eine oder mehrere Funktionalitäten erfüllt, die ausgewählt ist aus der Gruppe: Leckageschutz; Wasseraufbereitung; Dosierung; Heizungsbefüllung; Sicherheitsgruppe; Systemtrenner; einfache Rohrleitung; Druckminderer; und Filter.

6. Ventilautomatik (10) nach einem der vorgehenden Ansprüche, **dadurch gekennzeichnet, dass** eine Schnittstelle (22, 24) für die Kommunikation über das Internet oder ein anderes Netzwerk und/oder mit anderen Geräten vorgesehen ist.

7. Ventilautomatik (10) nach einem der vorgehenden Ansprüche, **dadurch gekennzeichnet, dass** die Aufnahme für die Anschlusseinheit von einem Schacht (48) gebildet ist, in welchen die Anschlusseinheit einsteckbar und dort arretierbar ist.

8. Ventilautomatik (10) nach einem der vorgehenden Ansprüche, **dadurch gekennzeichnet, dass** die Erkennungseinheit und/oder die Steuer- und Auswerteeinheiten jeweils ein zugeordnetes Datenverarbeitungsprogramm umfassen.

9. Ventilautomatik (10) nach Anspruch 8, **dadurch gekennzeichnet, dass** eine Schnittstelle (22, 24) vorgesehen ist, über welche Datenverarbeitungsprogramme änderbar und/oder hinzufügbar sind.

10. Modulanordnung enthaltend eine Ventilautomatik (10) nach einem der vorgehenden Ansprüche und wenigstens zwei Wasserarmaturen (100, 200, 300, 400, 500, 600) mit jeweils einer zugehörigen austauschbaren Anschlusseinheit, die mit Sensoren (118; 316, 318; 418, 420; 516, 524, 526, 527; 616, 618, 624) in der Wasserarmatur verbunden ist.
